(19) Europäisches Patentamt
European Patent Office
Office européen des brevets

(11) Numéro de publication: **0 214 042**
**B1**

(12) # FASCICULE DE BREVET EUROPEEN

(45) Date de publication du fascicule du brevet: **01.02.89**

(51) Int. Cl.⁴: **B01J 29/28**, C10G 11/05

(21) Numéro de dépôt: **86401820.5**

(22) Date de dépôt: **14.08.86**

(54) **Zéolithe de structure oméga.**

(30) Priorité: **04.09.85 FR 8513104**
**04.09.85 FR 8513105**

(43) Date de publication de la demande:
**11.03.87 Bulletin 87/11**

(45) Mention de la délivrance du brevet:
**01.02.89 Bulletin 89/5**

(84) Etats contractants désignés:
**BE DE GB IT NL**

(56) Documents cités:
**EP-A- 0 007 126**
**EP-A- 0 206 871**
**FR-A- 1 548 382**
**US-A- 3 923 639**
**US-A- 4 331 643**
**US-A- 4 384 161**

**CHEMICAL COMMUNICATIONS, no. 12, 18 juin 1969, pages 659,660; R.M. BARRER et al.: "Probable structure of zeolite omega"**

(73) Titulaire: **INSTITUT FRANCAIS DU PETROLE, 4, Avenue de Bois-Préau, F-92502 Rueil-Malmaison(FR)**

(72) Inventeur: **Raatz, Francis, 17, rue Michelet, F-92500 Rueil Malmaison(FR)**
Inventeur: **Marcilly, Christian, 91 ter rue Condorcet, F-78800 Houilles(FR)**
Inventeur: **Dufresne, Pierre, 67, rue Georges Sand, F-92500 Rueil Malmaison(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 214 042 B1

ACTORUM AG

## Description

La présente invention est relative à un nouveau catalyseur renfermant en poids au moins:
(a) environ 50 à 95% d'une matrice amorphe.
(b) 3 à 50% environ d'une zéolithe de structure oméga (ou mazzite) désaluminée caractérisée par:
– un rapport molaire global $SiO_2/Al_2O_3$ supérieur ou égal à 10,
– une teneur en sodium inférieure à 0,5% en poids, déterminée sur la zéolithe calcinée à 1100°C,
– des paramètres a et c de la maille élémentaire respectivement inférieurs à 1,814 nm et à 0,759 nm,
– une capacité d'adsorption d'azote mesurée à 77 K sous une pression partielle P/Po = 0,19, supérieure à 5% en poids, et
– une répartition poreuse comprenant entre 0.2 et 50% du volume poreux contenu dans des pores de rayon situés entre 1,5 et 14 nm, le reste du volume poreux étant contenu essentiellement dans des pores de rayon inférieur à 1 nm et,
(c) au moins un métal ou un composé de métal choisi dans le groupe constitué par les métaux nobles ou non nobles du groupe VIII de la classification périodique des éléments.

De préférence, la zéolithe est caractérisé par:
– un rapport molaire global $SiO_2/Al_2O_3$ supérieur à 15,
– des paramètres cristallins a et c respectivement entre 1,813 et 1,794 nm et entre 0,759 et 0,749 nm,
– une capacité d'absorption d'azote mesurée à 77 K pour une pression partielle P/Po = 0,19 supérieure à 11% en poids,
– une répartition poreuse comprenant de 1 à 50% du volume poreux contenu dans des pores de rayons situés entre 2 et 8 nm, le reste du volume poreux étant contenu dans des pores de rayons inférieurs à 1 nm.

La procédure de préparation de la zéolithe produit décrit ci-dessus est basée sur l'alternance d'échanges ioniques avec des cations ammonium, d'attaques acides et de traitements thermiques en présence ou non de vapeur d'eau. Ces traitements ont été utilisés dans l'art antérieur pour stabiliser diverses zéolithes. Cependant la zéolithe Ω est reconnue comme étant très peur stable. La préparation de zéolithes Ω stabilisées et désaluminées en particulier par les traitements cités ci-dessus n'a pas été réussie à ce jour. Les traitements de décationisation et de désalumination décrits dans l'invention améliorent considérablement d'une part les propriétés acides de la zéolithe Ω, et d'autre part sa stabilité. Cette zéolithe Ω peut alors être utlilisée comme catalyseur ou support de catalyseur dans des applications faisant appel à des réactions de mécanisme acide comme l'hydrocraquage ou l'hydroisomérisation de fractions pétrolières.

La zéolithe OMEGA (dénommée ZSM-4 par la société MOBIL) est l'analogue synthétique de la MAZZITE qui est une zéolithe naturelle. La zéolithe Ω est synthétisée en présence de cations sodium et de cations organiques généralement TMA (tétraméthyllamonium) (NL-C 6 710 729, US-A 4 241 036). Le rapport molaire Na/TMA est généralement voisin de 4 (Réf. 1: T. WEEKS, D. DIMAK, R. BUJALSKI et A. BOLTON, JCS Farad Trans 1, 72, (1976), 57; Réf. 2: F. LEACH et C. MARSDEN, Catalysis by Zeolites, B. IMELIK ed, 1980, p. 141, Elsevier (Amsterdam), et le rapport molaire $SiO_2/Al_2O_3$ est compris dans la fourchette 5 à 10 (US-A 4 241 036, T. WEEKS, D. KIMAK, R. BUKALSKI et A. BOLTON, JCS Farad Trans 1, 72, (1976), 57, F. LEACH et C. MARSDEN, Catalysis by Zeolithes, B. IMELIK ed, 1980, p. 141, (Elsevier) Amsterdam, réf. 3: A. ARAYA, T. BARBER, B. LOWE, D. SINCLAIR et A. VARMA, Zeolites, 4, (1984), 263). La zéolithe Ω cristallise dans le système hexagonal avec des paramètres $\vec{a}$ et $\vec{c}$ voisins 1,82 nm et 0,76 nm (T. WEEKS et al, réf. 1 R. BARRER et H. VILLIGER, Chem Comm., (1969), 65). La structure de la zéolithe Ω est formée de l'arrangement de cages gmelinites reliées entre elles suivant l'axe $\vec{c}$ (W. MEIER, D. OLSON, Atlas of Zeolites Structures Types, DRUCK + VERLAG AG, ZURICH, 1978). L'arrangement particulier des cages gmélinites dans la zéolithe Ω, ménage dans la structure un réseau de canaux à 12 côtés de diamètre voisins de 0,74 nm et parallèles à l'axe $\vec{c}$.

Avec des pores d'environ 0,7 nm de diamètre, la zéolithe Ω appartient à la catégorie des zéolithes à grande ouverture poreuse ce qui la rend particulièrement attractive pour des réactions telles que le craquage et l'hydrocraquage. Bien qu'elle possède des propriétés à priori intéressantes en catalyse, les performances catalytiques de la zéolithe Ω ont été encore peu explorées.

Seul un nombre limité de réactions, comme par exemple l'isomémérisation des cyclopropanes substitués (F. LEACH et al, réf. 2) ou encore le craquage du n-hexane (A. PERROTA, C. KIBBY, B. MITCHELL et E. TUCCI, J. Catal, 55, (1978), 240) ont été étudiées. Pour cette dernière réaction les auteurs indiquent qu'après échange par $NH_4^+$ et calcination à 500°C, la zéolithe Ω possède une activité initiale supérieure à celle de la zéolithe Y. Cependant traitée de cette façon, la zéolithe Ω se désactive extrêmement rapidement.

La principale raison qui explique le nombre limité d'études consacrées jusqu'ici aux propriétés catalytiques de la zéolithe Ω est la faible stabilité thermique de cette zéolithe. En effet il est bien connu dans la littérature scientifique que la zéolithe Ω sous forme NaTMA ou $NH_4$TMA peut être détruite (T. WEEKS, D. KIMAK et al. réf.1) ou voir sa cristallinité considérablement diminuée (F. LEACH et C. MARSDEN et

al. réf.2) par une calcination au-dessus de 600°C. Plusieurs raisons ont été invoqués pour rendre compte de la fragilité de la zéolithe Ω vis à vis des traitements thermiques. Cette fragilité serait due à des tailles de cristaux trop faibles (T. WEEKS, D. KIMAK et al. réf. 1, A. ARAYA, T. BARBER et al. réf. 3) ou proviendrait du rôle particulier joué par les cations TMA cans la cohésion de la charpente cristalline (T. WEEKS, D. KIMAK et al. réf.1). La cause de la fragilité thermique de la zéolithe Ω reste encore mal comprise.

Dans certaines conditions opératoires, il est possible de préserver en partie la cristallinité de la zéolithe Ω lors de traitements thermiques. Cependant, comme on le verra, les produits obtenus ne sont pas intéressants en catalyse acide. La calcination d'une forme NaTMAΩ en faible quantité dans un appareil d'analyse thermique différentielle conduit à un solide qui reste cristallisé à 800°C (A. ARAYA, T. BARBER et al. réf. 3); un tel solide n'est pas désaluminé et contient encore tous les cations alcalins de départ. La calcination dans des conditions de lit épais de la forme $NH_4$TMAΩ conduit également à une augmentation de la stabilité thermique (T. WEEKS, D. KIMAK et al. réf. 1) mais les solides obtenus ne présentent qu'une activité très modérée en hydrocraquage et isomériation.

En ce qui concerne la désalumination de la zéolithe Ω, plusieurs techniques ont été proposées. Ces techniques décrites ci-dessous ne permettent pas d'aboutir à des solides possédant les spécifications que nous recherchons, en particulier un rapport $SiO_2/Al_2O_3$ élevé combiné à l'existence d'un réseau poreux secondaire. Dans le brevet (US-A 3 937 791), W. GARWOOD et al revendiquent la désalumination de diverses zéolithes dont la zéolithe Ω par des sels de Cr (III). Cette méthode conduit à un remplacement des atomes d'aluminium par des atomes de chrome. Il y a bien désalumination de la structure mais aussi fatalement enrichissement en chrome. B. LOK et al proposent une technique de désalumination par traitement au fluor gazeux à haute température (US-A 4 297 335) applicables à plusieurs zéolithes mais qui provoque dans le cas de la zéolithe Ω une dégradation de la structure cristalline. Dans un autre brevet (EP 100 544), la désalumination de nombreuses zéolithes, dont la zéolithe Ω par calcination en présence de $SiCl_4$ à des températures inférieures à 200°C, est revendiquée. Cette revendication est tout à fait surprenante dans la mesure où il est bien établi que des températures plus élevées sont nécessaires pour désaluminer les zéolithes par cette technique (K. BEYER and I. BELENNYKASA Catalysis by Zeolites, B. IMELIK et al. (Ed), (1980), 203). La désalumination de la zéolithe Ω par $SiCl_4$ semble effectivement possible à condition de se placer à des températures élevées, 500°C par exemple (réf. 4: J. KLINOWSKI, M. ANDERSON et J. THOMAS J.C.S., Chem. Commun. 1983, p. 525, O. TERASEKI, J. THOMAS et G. MILLWARD, Proc. R. Soc. London(A), 395, (1808), 153–64).

Cependant même dans ces conditions l'augmentation du rapport Si/Al est apparemment limitée puisque celui-ci passe de 4.24 avant traitement à 4.5 après traitement (J. KLINOWSKI, M. ANDERSON et al. réf. 4) Dans la mesure où la désalumination par traitement par $SiCl_4$ est une méthode applicable à la zéolithe Ω, il est essentiel de souligner que cette technique conduit irrémédiablement à un remplacement atome par atome des aluminium de la charpente par des silicium (H. BEYER et I. BELENYKAJA, Catalysis by Zeolites, B. IMELIK et al editors (1980) p. 203, Elsevier Amsterdam). On obtient ainsi une zéolithe qui reste parfaitement microporeuse (H. BEYER et I. BELENYKAJA). Il n'y a pas comme dans la technique que l'on préconique ici, création d'un réseau poreux secondaire. Or ce réseau secondaire joue un rôle important dans la transformation des hydrocarbures lourds. Par ailleurs d'après la référence (J. KLINOWKI, M. ANDERSON et al. réf. 4), la zéolithe désaluminée par $SiCl_4$ voit son volume de maille augmenter ce qui est exactement l'inverse de ce qui est obtenu par la méthode de la présente invention.

Finalement, il apparaît que dans l'état actuel de l'art, on ne sait pas préparer une zéolithe Ω forme hydrogène stabilisée, désaluminée, de faible volume de maille et possédant un réseau poreux secondaire. A partir de zéolithes Ω possédant ces propriétés, il est possible de préparer des catalyseurs actifs et sélectifs notamment par exemple pour les réactions de craquage et d'hydrocraquage.

Zéolithes Ω désaluminées:

On a constaté qu'il est possible par une alternance d'échanges ioniques dans des solutions d'un sel d'ammonium ionisable ou d'attaques acides et de traitements thermiques d'obtenir à partir d'une zéolithe Ω issue de synthèse (sous forme Na-TMA par exemple) dont le rapport molaire $SiO_2/Al_2O_3$ est compris entre 6 et 10, une zéolithe Ω forme hydrogène bien cristallisée de teneur en sodium inférieure à 0,5% et de préférence inférieure à 0,1% poids et dont le rapport $SiO_2/Al_2O_3$ est supérieur à 10 et même 50.

Le procédé de préparation est caractérisé en ce que:
dans une première étape, l'on soumet la zéolithe de synthèse à un traitement d'élimination de la majeure partie des cations organiques, tout en abaissant la teneur en alcalins à une valeur inférieure à 0,5% en poids, par au moins un traitement choisi dans le groupe constitué par un échange cationique et une calcination, et (b) dans une deuxième étape on soumet le solide obtenu à l'étape précédente à au moins une calcination, puis à au moins une attaque acide de façon à obtenir un rapport molaire

$$\frac{SiO_2}{Al_2O_3}$$

supérieur à 10.

Les échanges ioniques (cationiques) et les attaques acides sont réalisées à des températures généralement comprises entre 0 et 150°C. Pour les échanges ioniques des solutions de sels d'ammonium ionisables sont utilisées, de préférence le nitrate ou le chlorure d'ammonium sont utilisés. Les attaques acides sont réalisées dans des solutions d'acides minéraux (HCl par exemple) ou organiques ($CH_3COOH$ par exemple). Les traitements thermiques sont effectués entre 400 et 900°C avec ou sans injection de vapeur d'eau. Le produit obtenu à l'issue de ces diverses étapes de traitement possède un spectre de diffraction X qui est celui de la zéolithe Ω (tableau 1). Les paramètres cristallins ont les dimensions suivantes: $\vec{a}$ est compris dans la fourchette 1,814 nm à 1,794 nm, $\vec{c}$ est compris dans la fourchette 0,759 nm à 0,749 nm. De préférence $\vec{a}$ et $\vec{c}$ sont respectivement inférieurs à 1,804 nm et 0,753 nm.

La capacité d'adsorption d'azote à 77 K pour une pression partielle de 0,19 est supérieure à 5% en poids de préférence supérieure à 11%. Le réseau poreux n'est plus uniquement constitué de micropores mais comprend un réseau de mésopores dont les rayons mesurés par la méthode BJH (voir plus loin) sont situés entre 2,0 nm et 8,0 nm et plus généralement entre 1,5 nm et 14,0 nm. Le volume des mesopores correspond à environ 0,2 à 50% du volume poreux total de la zéolithe.

Charactérisation des zéolithes Ω désaluminées

La zéolithe Ω riche en silice obtenue dans la présente invention a été caractérisée par les techniques suivantes:

– Diffraction des rayons X

L'appareillage utilisé comprend: un générateur PHILIPS PW 1130 (35 mA, 35 kV), un goniomètre PHILIPS PW 1050, un tube Cu (Foyer fin), un monochromateur arrière de graphite, un passeur automatique d'échantillon.

A partir des spectres de diffraction des rayons X, on a mesuré pour chaque échantillon, la surface du fond sur une plage (2 σ) de 6 à 32° d'une part, et dans la même zone, la surface des raies en nombre d'impulsions pour un enregistrement pas à pas de 2 secondes sur des pas de 0,02° (2 σ). Le pourcentage de produit cristallisé est exprimé par le rapport

$$\frac{\text{surface des raies}}{\text{surface totale}} \cdot$$

On compare ensuite les rapports de chaque échantillon traité, par rapport à une référence étalon de la même série que l'échantillon et contenant une quantité inférieure ou égale à 1% en poids de sodium. Ainsi le taux de cristallinité est exprimé en pourcentage par rapport à une référence prise arbitrairement à 100.

Il est important de bien choisir la référence, car dans certains cas, il peut y avoir une exhaltation ou une diminution d'intensité des raies, en fonction de la teneur en cations des échantillons.

Les paramètres cristallins ont été calculés par la méthode des moindres carrés à partir de la formule (maille hexagonale):

$$d = \sqrt{\left[\frac{4}{3} a^2 \,(h^2 + k^2 + hk)\right] + \frac{1^2}{c^2}}$$

– Microporosité

La mesoporosité est déterminée par la technique BJH (BARRET, JOYNER, HALENDA, J. Am. Chem. Soc. 73, 373 (1951)) basée sur l'exploitation numérique de l'isotherme de désorption d'azote; le volume poreux total est pris à une pression d'azote telle que P/Po = 0,9, P étant la pression d'azote de la mesure et Po la pression de vapeur saturante de l'azote à la température de la mesure. Le volume microporeux est estimé à partir de la quantité d'azote adsorbée à 77 K pour une pression partielle P/Po égale à 0,19.

– Analyse chimique

La composition chimique des échantillons a été déterminée par analyse chimique classique: fluorescence x et absorption atomique.

Préparation des zéolithes Ω désaluminées

La zéolithe Ω de départ est obtenue par synthèse. Elle contient des cations alcalins (généralement $Na^+$, et généralement plus de 1% et même plus de 4% en poids de sodium) et des cations organiques (généralement TMA ou TPA). Le rapport

$$\frac{\text{cations alcalins}}{\text{cations organiques + alcalins}}$$

est compris dans la fourchette [1, 0.50] et le rapport molaire

$$\frac{SiO_2}{Al_2O_3}$$

est situé entre 6 et 10.

La méthode utilisée dans la présente invention pour obtenir une zéolithe Ω désaluminée et stabilisée est la suivante:

On prépare tout d'abord par les techniques connues dans l'art antérieur une zéolithe Ω non désaluminée exempte de cations organiques et à très faible teneur en alcalin (teneur en sodium inférieure à 0,5% et de préférence 0,10% en poids). Une des possibilités pour aboutir à cette zéolithe Ω intermédiaire est la suivante:

– élimination des cations organiques par une calcination sous mélange gaz inerte plus éventuellement oxygène (la teneur molaire en oxygène est supérieure à 2% et de préférence supérieure à 10%) à des températures comprises entre 450 et 650°C et de préférence situées entre 500 et 600°C pendant une durée supérieure à 20 nm,

– élimination des cations alcalins par au moins un échange cationique à une température comprise par exemple entre 0 et 150°C dans une solution d'un sel d'ammonium ionisable (nitrate, sulfate, chlorure, acétate etc.) de molarité située entre 3 et la saturation, et de préférence entre 1 et 10.

Il est possible d'inverser l'ordre élimination des cations organiques – élimination des cations alcalins ou encore d'omettre l'étape de décomposition thermique des cations organiques.

A l'issue de cette série de traitements, le solide n'est pas désaluminé et contient moins de 0,5% et de préférence moins de 0,1% de sodium en poids.

La zéolithe Ω obtenue après cette première série de traitements est soumise à une calcination de préférence en présence de vapeur d'eau. Deux techniques peuvent être utilisées:

– calcination sous air ou inerte, contenant de préférence entre 5% et 100% de vapeur d'eau avec des débits totaux compris entre 0.01 et 100 $l\ h^{-1}\ g^{-1}$. La température de calcination est située entre 500 et 900°C, la durée du traitement est supérieure à une demi-heure et de préférence supérieure à une heure,

– calcination entre 500 et 900°C en atmosphère confinée, c'est-à-dire avec un débit de gaz extérieur nul. Dans ce cas la vapeur d'eau nécessaire au traitement est apportée par le produit lui-même.

Aprés la calcination, en présence de vapeur d'eau ou en vapeur-confinée, la zéolithe Ω est soumise à au moins une attaque acide à une température comprise entre 0 et 150°C. Les acides utilisés peuvent être minéraux (acide chlorhydrique, nitrique, bromhydrique, sulfurique, perchlorique) ou organiques (acétique ou oxalique par exemple). La normalité de l'acide est située entre 0,1 et 10 N ( de préférence entre 0,5 et 2,0 N) avec un rapport volume/poids exprimé en $cm^3\ g^{-1}$ compris entre 2 et 10. La durée du traitement est supérieure à une demi-heure. Il est préférable de réaliser l'attaque acide dans des conditions contrôlées pour éviter la dégradation posssible du solide. Ainsi cn pourra tout d'abord mettre la zéolithe en suspension dans l'eau distillée puis ajouter l'acide de manière graduelle.

Pour obtenir une zéolithe Ω stabilisée de rapport molaire $SiO_2/Al_2O_3$ élevé (supérieur à 10 et même supérieur à 50) par la présente invention, le protocole préféré est le suivant:

1) élimination des cations organiques par calcination sous air,
2) échange des cations alcalins ($Na^+$) par des cations ammonium,
3) calcination en présence de vapeur d'eau,
4) attaque acide.

Pour atteindre le rapport $SiO_2/Al_2O_3$ désiré, il est nécessaire de bien choisir les conditions opératoires; de ce point de vue les paramètres les plus critiques sont la température, la durée et la pression partielle en vapeur d'eau retenues pour l'étape 3), et la sévérité de l'étape 4) (concentration de l'acide, nature de l'acide, température). Quand des rapports $SiO_2/Al_2O_3$ particulièrement élevés sont visés, par exemple supérieurs à 100, il peut s'avérer nécessaire de procéder à plusieurs cycles (calcination-attaque acide). C'est-à-dire d'effectuer plusieurs fois le cycle étape 3 puis étape 4.

Les zéolithes oméga désaluminées obtenues par la présente invention présentent des propriétés très intéressantes lorsqu'elles sont utilisées comme bases de catalyseurs pour différentes réactions faisant appel à un mécanisme acide.

En effet, dans une zéolithe de forme protonique, l'acidité est due aux protons associés aux atomes d'aluminium, ainsi les zéolithes partiellement désaluminées sont donc aussi partiellement déprotonnées. Les techniques de désalumination permettent donc de faire varier le nombre de sites acides. De plus il est connu que la force intrinsèque d'un site acide dépend de l'environnement du site et donc du rapport $SiO_2/Al_2O_3$.

Les zéolithes Ω désaluminées selon l'invention possèdent donc un spectre d'acidité très différent des zéolithes Ω classiques non désaluminées. Ces propriétés acides particulières peuvent être utilisées avec profit pour réaliser des catalyseurs utilisés dans des procédés tels que l'hydrocraquage, l'hydroisomérisation, le reformage, la dismutation, l'alkylation, la polymérisation etc. par un mélange adéquat de la zéolithe selon l'invention dans une matrice appropriée, avec présence ou non de métaux ou composés de métaux promoteurs.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 $m^2 \cdot g^{-1}$ environ) présentant une acidité superficielle, tels que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, tels que le nickel, le palladium ou le platine par exemple, soit par une association d'au moins deux métaux choisis parmi les groupes VI de la classification périodique, (molybdène et tungstène notamment), et VIII de la même classification, (cobalt et nickel notamment), deux au moins des métaux de cette association appartenant à deux groupes différents (VI et VIII précédemment cités).

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (≥ 390°C environ), et à vitesse spatiale d'alimentation faible (la VVH exprimée en volume de charge traitée par unité de volume de catalyseur et par heure est généralement inférieure à 2), mais dotés d'une très bonne sélectivité en distillats moyens. Inversement, une fonction acide forte et une fonction hydrogénante faible donnent des catalyseurs très actifs mais présentant une mauvaise sélectivité en distillats moyens.

Les catalyseurs conventionnels de l'hydrocraquage catalytique sont, souvent, constitués de supports faiblement acides, tels les silice-alumines amorphes par exemple. Ces systèmes sont utilisés pour produire des distillants moyens de très bonne qualité, ou encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0,5% poids, à une association des sulfures des métaux des groupes VI B et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les zéolithes acides présentent l'avantage par rapport aux autres supports acides précédemment cités, d'apporter une acidité beaucoup plus élevée. Les catalyseurs nouveaux qui les contiennent sont donc beaucoup plus actifs et pour cette raison, permettent de travailler à température plus basse et/ou à vitesse spatiale d'alimentation (VVH) plus élevée. En revanche, cette acidité plus élevée modifie l'équilibre entre les deux fonctions catalytiques, acide et hydrogénante. Il en résulte une modification de sélectivité notable de ces catalyseurs par rapport aux catalyseurs conventionnels: ils sont plus craquants et produisent par conséquent beaucoup plus d'essence que de distillats moyens.

Ainsi la présente invention concerne un nouveau type de catalyseur zéolithique, renfermant une zéolithe dont les caractéristiques physiques et l'acidité ont été décrites ci-dessus, et une matrice amorphe à base d'alumine ou d'une combinaison d'oxydes qui seront définis plus loin. Ce nouveau type de catalyseur présente une activité et une sélectivité en distillats moyens notablement améliorées par rapport aux autres systèmes de l'art antérieur à base de zéolithes.

De préférence le catalyseur d'hydrocraquage renferme au moins un métal ou un composé de métal choisi dans le groupe constitué par les métaux nobles ou non nobles du groupe VIII de la classification périodique des éléments, la concentration en métal ou métaux nobles du groupe VIII, exprimée en poids

de ce ou ces métaux, étant comprise entre 0,03 et 3%, la concentration en métal ou métaux, non nobles du groupe VIII, exprimée en poids de ce ou ces métaux, étant comprise entre 0,05 et 10%.

Le catalyseur selon l'invention convient pariculièrement pour les réactions d'hydrocraquage d'hydrocarbures. Un catalyseur d'hydrocraquage contenant une zéolithe définie ci-dessus testé avec un résidu sous vide hydrotraité ou une autre charge lourde classique de l'hydrocraquage est beaucoup plus actif et sélectif en distillats moyens, qu'un catalyseur contenant une zéolithe Oméga non modifiée. Sans préjuger des raisons de cette amélioration par rapport à une zéolithe Oméga non modifiée, on peut dire que le type de traitement adopté a modifié la nature et la force de la fonction acide du catalyseur ainsi que l'accessibilité du site aux molécules lourdes hydrocarbonées, lesquelles comprennent typiquement 20 à 40 atomes de carbone.

La zéolithe dont les caractéristiques satisfont aux critères définis précédemment est dispersée dans une matrice généralement amorphe à base d'alumine, de silice, de silice-alumine, d'alumine-oxyde de bore, de magnésie, de silice-magnésie, de zircone, d'oxyde de titane ou à base d'une combinaison de deux au moins des oxydes précédents, ou encore à base d'une argile, ou d'une combinaison des oxydes précédents avec de l'argile. Cette matrice a essentiellement pour rôle d'aider à mettre en forme la zéolithe, autrement dit à la produire sous forme d'agglomérats, billes, extrudés, pastilles etc., qui pourront être placés dans un réacteur industriel. La proportion de matrice dans le catalyseur est d'environ 50 à 95% en poids.

Le composant d'hydro-déshydrogénation du catalyseur de la présente invention est par exemple un composé d'un métal du groupe VIII de la classification périodique des éléments, (notamment le nickel, le palladium ou le platine), ou une combinaison d'au moins deux des composés précédents, ou une combinaison de composés de métaux (oxydes notamment) des groupes VI (molybdène et/ou tungstène notamment) et des métaux non nobles du groupe VIII (cobalt et/ou nickel notamment) de la classification périodique des éléments.

Le catalyseur final d'hydrocraquage doit comprendre entre 3 et 50% en poids de zéolithe Oméga spécialement modifiée. Les concentrations des composés métalliques, exprimées en poids de métal du groupe VIII sont les suivantes: entre 0,03 et 3% en poids, dans le cas où il s'agit uniquement de métaux nobles du type palladium ou platine, 0,05 à 10% en poids de métaux du groupe VIII, dans le cas où il s'agit de métaux non nobles du groupe VIII du type nickel par exemple; lorsqu'on utilise à la fois au moins un métal ou composé de métal du groupe VIII et au moins un composé d'un métal du groupe VI, on emploie environ 5 à 40% en poids d'une combinaison d'au moins un composé (oxyde notamment) d'un métal du groupe VI (molybdène ou tungstène notamment) et d'au moins un métal ou composé de métal du groupe VIII (cobalt ou nickel notamment) et de préférence 12 à 30%, avec un rapport pondéral (exprimé en oxydes métalliques) de métaux du groupe VIII sur métaux du groupe VI compris entre 0,05 et 0,8 et de préférence entre 0,13 et 0,5.

La fonction hydrogénante telle qu'elle a été définie précédemment (métaux du groupe VIII ou association d'oxydes de métaux des groupes VI et VIII) peut être introduite dans le catalyseur à divers niveaux de la préparation et de diverses manières.

Elle peut être introduite en partie seulement (cas des associations d'oxydes de métaux des groupes VI et VIII) ou en totalité au moment du malaxage de la zéolithe avec le gel d'oxyde choisi comme matrice. Elle peut être introduite par une ou plusieurs opérations d'échange ionique sur le support calciné constitué de la zéolithe HY dispersée dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (Co et/ou Ni notamment) lorsque les précurseurs des oxydes des métaux du groupe VI (Mo et/ou W) ont été préalablement introduits au moment du malaxage du support. Elle peut enfin être introduite par une ou plusieurs opérations d'imprégnation du support calciné constitué de zéolithes HY et de la matrice, par des solutions contenant les précurseurs des oxydes de métaux des groupes VI et/ou VIII, les précurseurs des oxydes des métaux du groupe VIII étant de préférence introduits après ceux du groupe VI ou en même temps que ces derniers. Les principaux sels précurseurs qui peuvent être utilisés sont par exemple:

pour le groupe VIII (cobalt ou nickel): nitrate, acétate, sulfate des cations bivalents hydratés ou des cations hexammines $Co(NH_3)_6^{2+}$ et $Ni(NH_3)_6^{2+}$

pour le groupe VI (Mo et W): les divers molybdates ou tungstates d'ammonium connus.

Dans le cas où les oxydes des métaux sont introduits en plusieurs imprégnations des sels précurseurs correspondants, une étape de calcination intermédiaire du catalyseur devra être effectuée à une température comprise entre 250 et 600°C.

L'imprégnation du molybdène ou de tungstène peut être facilitée par ajout d'acide phosphorique dans les solutions de paramolybdate d'ammonium. Il est également possible de procéder à une imprégnation molybdène nickel en présence d'acide phosphorique.

Les catalyseurs ainsi obtenus conviennent particulièrement pour l'hydrocraquage de coupes lourdes, et présentent une activité améliorée par rapport à l'art antérieur, et ont de plus une sélectivité améliorée pour la production de distillats moyens de très bonne qualité.

Les charges employées dans ce procédé sont des distillats atmosphériques ou sous vide, des résidus désasphaltés ou hydrotraités ou équivalents. Elles sont constituées au moins à 80% en volume de composés dont les points d'ébullition sont situés entre 350 et 580°C. Elles contiennent des hétéroatomes tels que soufre et azote. Les conditions de l'hydrocraquage telles que, température, pression, taux de recyclage d'hydrogène, vitesse volumique horaire, doivent être adaptées à la nature de la charge, caractérisée notamment par la gamme des points d'ébullition, la teneur en aromatiques ou polyaromatiques, la teneur en hétéroatomes. Les teneurs en azote sont comprises généralement entre 5 et 2000 ppm, et les teneurs en soufre entre 50 et 30.000 ppm.

La température est en général supérieure à 230°C et souvent comprise entre 300°C et 430°C. La pression est supérieure à 15 bars et en général supérieure à 30 bars. Le taux de recyclage d'hydrogène est au minimum de 100 et souvent compris entre 260 et 3000 litres d'hydrogène par litre de charge. La vitesse volumique horaire est comprise en général entre 0,2 et 10.

Les résultats qui importent au raffineur sont l'activité d'une part et la sélectivité d'autre part: naphta ou distillats moyens. Les objectifs doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que la conversion peut être augmentée par une élévation de température, mais c'est souvent au détriment de la sélectivité. La sélectivité en distillats moyens s'améliore avec une augmentation de la pression ou du taux de recyclage d'hydrogène, mais ceci au détriment de l'économie du procédé. Ce type de catalyseur permet d'atteindre dans des conditions de marche classique des sélectivités en distillats de point d'ébullition compris entre 150 et 380°C supérieurs à 65%, et ceci pour des niveaux de conversion, en produits de point d'ébullition inférieur à 380, supérieurs à 55% en volume. Ce catalyseur présente de plus, dans ces conditions, une stabilité remarquable, ce qui est dû notamment à la haute surface spécifique du produit. Enfin, du fait de la composition du catalyseur et de la qualité de la zéolithe, le catalyseur est facilement régénérable.

Les caractéristiques de l'invention sont précisées par quelques exemples présentés ci-après:

EXEMPLE 1

Préparation d'une zéolithe Ω forme hydrogène stabilisée de rapport molaire

$$\frac{SiO_2}{Al_2O_3} = 15.$$

100 g d'une zéolithe Ω de composition molaire 0,88 $Na_2O$ 0,12 $TMA_2O$ $Al_2O_3$ 8,30 $SiO_2$ ont été calcinés sous un mélange molaire 10% $O_2$+90% $N_2$ (débit total 5 l $h^{-1}$) à 550°C pendant deux heures. A l'issue de cette étape, les cations TMA sont éliminés. Le solide obtenu est référencé OM1.

Le solide OM1 subit ensuite trois échanges cationiques dans une solution de $NH_4NO_3$ 6N à 100°C pendant deux heures sous agitation. Le rapport volume de solution sur poids de solide sec est égal à 4. La teneur en sodium atteinte après les trois échanges est égale à 0.04% en poids. Le solide est référencé OM2.

Les caractéristiques du solide OM2 sont les suivantes:

| | Diffraction X | | | Adsorption |
|---|---|---|---|---|
| | Paramètres (nm) | | Cristallinité | $N_2$ (% pds) |
| | a | c | (%) | |
| OM2 | 1,815 | 0,760 | 100 | 11 |

On donne dans le tableau 1, le diagramme de diffraction X de OM2.

Tableau 1

Caractéristiques du diagramme de diffraction X de la zéolithe oméga OM2 de paramètres cristallins a = 1,815 nm et c = 0,760 nm.

| 2 σ | d (nm) | I/I max. |
|---|---|---|
| 5,55 | 1,591 | 10 |
| 9,74 | 0,908 | 100 |
| 11,27 | 0,785 | 15 |
| 12,94 | 0,684 | 55 |
| 14,93 | 0,593 | 55 |
| 16,24 | 0,546 | 20 |
| 16,95 | 0,523 | 10 |
| 18,99 | 0,467 | 25 |
| 20,43 | 0,435 | 10 |
| 22,69 | 0,392 | 20 |
| 23,54 | 0,378 | 90 |
| 24,08 | 0,369 | 40 |
| 24,71 | 0,360 | 40 |
| 25,42 | 0,350 | 75 |
| 26,03 | 0,342 | 25 |
| 28,43 | 0,313 | 70 |
| 29,04 | 0,307 | 40 |
| 29,57 | 0,302 | 30 |
| 30,77 | 0,290 | 75 |
| 33,94 | 0,264 | 15 |
| 34,22 | 0,262 | 10 |

Le solide OM2 est soumis à deux traitements successifs, un self steaming ou une calcination sous vapeur d'eau puis une attaque acide. Les références des solides sont indiquées sur le schéma suivant:

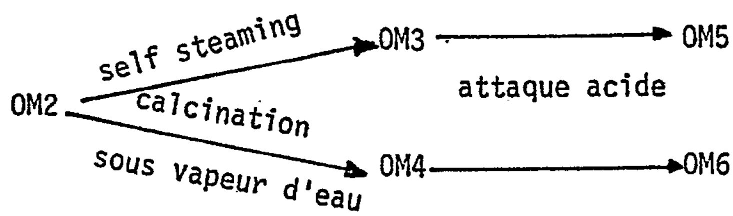


Les conditions opératoires utilisées pour ces différents traitements sont détaillés ci-dessous:
– Self steaming (ou traitement hydrothermique): Le solide est chargé dans un réacteur puis enfourné dans un four préalablement chauffé à 600°C. Le traitement est effectué sous atmosphère statique et sa durée est de deux heures.

Calcination sous vapeur d'eau:

– vitesse de montée en température 10°C $mn^{-1}$,
– débit d'air 3 l $h^{-1}$ $g^{-1}$,
– injection d'eau à 400°C et débit 2.25 $cm^3$ $h^{-1}$ $g^{-1}$ d'eau liquide soit une teneur molaire en vapeur d'eau de 50%,
– température finale 600°C et palier de deux heures à cette température,
– descente jusqu'à l'ambiante sous air, débit 6 l $h^{-1}$ $g^{-1}$

Attaque acide:

- HCl 1N,
- rapport V/P = 13 $cm^3/g$ solide sec,
- T = 100°C,
- durée 4 heures sous agitation.

Tableau 2

Caractéristiques physicochimiques des solides OM3, OM4, OM5 et OM6.

| | | OM3 | OM4 | OM5 | OM6 |
|---|---|---|---|---|---|
| $\frac{SiO_2}{Al_2O_3}$ moles | | 8.3 | 8.3 | 15 | 16 |
| Diffraction X | Cristallinite % | 83 | 86 | 80 | 79 |
| | Paramètre (nm) a | 1,814 | 1,814 | 1,812 | 1,812 |
| | Paramètre (nm) c | 0,757 | 0,756 | 0,756 | 0,755 |
| Adsorption | $N_2$ % pds | 8,1 | 8,5 | 12,6 | 12,2 |

Les caractéristiques des solides OM3, OM4, OM5 et OM6 sont reportées dans le tableau 2. Les zéolithes OMEGA désaluminées et stabilisées OM5 et OM6 possèdent un réseau de pores secondaires crées par les traitements qu'ont subi ces solides. Les rayons de ces pores secondaires sont centrés aux alentours de 4,0 nm en rayon. Les zéolithes OMEGA formes H référencées OM5 et OM6 possèdent un rapport $SiO_2/Al_2O_3$ qui est pratiquement le double de celui de la zéolithe de départ et conservent une bonne cristallinité.

Ces zéolithes Ω désaluminées: OM5 et OM6, possèdent une stabilité thermique nettement améliorée par rapport au produit de départ. En effet après une calcination réalisée à 950°C pendant 5 heures sous débit d'air sec de 15 l $h^{-1}$ $g^{-1}$, les zéolithes OM5 et OM6 conservent des taux de cristallinité égaux respectivement à 70 et 73%. La calcination dans les mêmes conditions de la zéolithe de départ ou des solides OM1 et OM2 conduit à une destruction de la charpente cristalline soit un taux de cristallinité nul.

<u>EXEMPLE 2</u>

Préparation d'une zéolithe Ω forme hydrogène stabilisée de rapport molaire

$$\frac{SiO_2}{Al_2O_3} = 25$$

Il est possible de faire varier dans une large gamme le rapport molaire de la zéolithe Ω en modifiant la température et/ou la teneur en vapeur d'eau des traitements thermiques.

On illustre dans cet exemple l'effet de la température du traitement thermique effectué en présence de vapeur d'eau. Les conditions opératoires sont strictement identiques à celles utilisées dans l'exemple 1 pour préparer le solide OM5. La seule différence concerne la température du self steaming effectué sur le solide OM2; ce traitement est réalisé ici à 700°C. Le solide obtenu après le self steaming à 700°C à partir de OM2 est référencé OM7 puis OM8 après l'attaque acide. Les caractéristiques physicochimiques des solides OM7 et OM8 sont rassemblées dans le tableau suivant:

| | | | OM7 | OM8 |
|---|---|---|---|---|
| $SiO_2/Al_2O_3$ (moles) | | | 8,3 | 25 |
| Diffraction X | Cristallinité (%) | | 79 | 80 |
| | Paramètre | a | 1,807 | 1,805 |
| Adsorption | (nm) | c | 0,755 | 0,755 |
| | $N_2$ (% pds) | | 6 | 13 |

La zéolithe Ω forme H referéncée OM8 possède un rapport $SiO_2/Al_2O_3$ environ trois fois plus élevé que celui de la zéolithe de départ et conserve une bonne cristallinité. Sa structure poreuse est caractérisée par une mésoporosité secondaire qui est centrée autour de 4 nm en rayon. La répartition des pores secondaires s'étend de 1,5 à 8 nm en rayon. La zéolithe Ω désaluminée OM8 possède une stabilité thermique nettement améliorée par rapport au produit de départ. En effet après une calcination réalisée à 950°C pendant 5 heures sous un débit d'air sec de 15 l $h^{-1}$ $g^{-1}$, la zéolithe OM8 conserve un taux de cristallinité égal à 70%. La calcination dans les mêmes conditions de la zéolithe de départ ou des solides OM1 et OM2 conduit à une destruction de la charpente cristalline, soit un taux de cristallinité nul.

EXEMPLE 3

Préparation d'une zéolithe Ω sous forme hydrogène stabilisée de rapport molaire

$$\frac{SiO_2}{Al_2O_3} = 50.$$

Pour obtenir par la technique décrite dans les deux exemples précédents (traitement thermique en présence de vapeur d'eau suivi d'une attaque acide), une zéolithe Ω stabilisée de rapport $SiO_2/Al_2O_3$ très élevé, on peut soit augmenter la sévérité des traitements, soit répéter les traitements, c'est-à-dire procéder à des cycles calcination en présence de vapeur d'eau-attaque acide. Dans cet exemple on illustre la deuxième possibilité.

A partir du solide OM5 décrit dans l'exemple 1, on procède successivement à:

– un self steaming dans les conditions de l'exemple 2, c'est-à-dire à 700°C,

– une attaque acide dans les conditions de l'exemple 1. Le solide obtenu après le self steaming réalisé à 700°C est référencé OM9, celui obtenu à partir de OM9 par l'attaque acide est référence OM10. Les caractéristiques physicochimiques de OM9 et OM10 sont indiquées dans le tableau suivant:

| | | | OM9 | OM10 |
|---|---|---|---|---|
| $SiO_2/Al_2O_3$ (moles) | | | 15 | 50 |
| Diffraction X | Cristallinité (%) | | 75 | 85 |
| | Paramètre | a | 1,802 | 1,801 |
| Adsorption | (nm) | b | 0,754 | 0,753 |
| | $N_2$ (% pds) | | 12 | 14 |

Comme les solides désaluminés et stabilisés OM5, OM6, OM8, les zéolithes Oméga OM9 et OM10 possèdent un réseau de pores secondaires dont les rayons sont centrés autour de 4 nm. La stabilité thermique de OM10 est tout à fait comparable à celle de OM8 (exemple 2). La cristallinité est encore de 82% après une calcination à 950°C sous un débit d'air sec de 15 l $h^{-1}$ $g^{-1}$ pendant 5 heures.

EXEMPLE 4

Préparation d'une zéolithe Ω forme hydrogène stabilisée de rapport molaire

$$\frac{SiO_2}{Al_2O_3} = 150$$

On procède comme dans l'exemple 3 à des cycles calcination en présence de vapeur d'eau-attaque acide.

Le solide de départ est la zéolithe OM8 de l'exemple n° 2. On fait subir à ce solide successivement:
– à un self steaming dans les conditions de l'exemple n° 1 mais à une température supérieure soit 800°C,
– à une attaque acide dans les conditions de l'exemple n° 1.

Le solide obtenu après le self steaming est référencé OM11 puis OM12 après l'attaque acide. Les caractéristiques physicochimiques de ces solides sont données dans le tableau suivant:

| | | | OM11 | OM12 |
|---|---|---|---|---|
| $SiO_2/Al_2O_3$ (moles) | | | 25 | 150 |
| Diffraction X | Cristallinité (%) | | 75 | 90 |
| | Paramètre (nm) | a | 1,798 | 1,796 |
| | | c | 0,752 | 0,752 |
| Adsorption | $N_2$ (% pds) | | 12 | 15 |

La répartition en rayon de la mesoporosité secondaire de OM11 et OM12 est tout à faire similaire à celle de OM10 (exemple 3). La stabilité thermique de OM11 et OM12 reste excellente, puisque les taux de cristallinité de ces solides sont encore égaux respectivement à 73 et 85% après un traitement thermique de 5 heures à 950°C sous un débit d'air sec de 15 l $h^{-1}$ $g^{-1}$.

EXEMPLE 6 (comparatif)

Préparation d'une zéolithe Ω de rapport

$$\frac{SiO_2}{Al_2O_3} = 50$$

par attaque acide directe.

Sur 100 g de zéolithe OM1 (exemple 1) on effectue deux attaques acides successives dans 400 $cm^3$ d'une solution HCl 1N à 100°C pendant 4 heures. Le solide obtenu par ce traitement est référencé OM14. Il possède un taux de cristallinité nul et un rapport molaire $SiO_2/Al_2O_3$ = 50. Il est donc possible de désaluminer la zéolithe Ω par attaque acide directe, c'est à dire procéder tout d'abord à un traitement thermique en présence de vapeur d'eau. Cependant le traitement acide direct conduit à une dégradation extrêmement importante de la structure cristalline.

EXEMPLE 7 (comparatif). Préparation d'une zéolithe Ω forme hydrogène de rapport molaire $SiO_2/Al_2O_3$ = 7,6.

100 g de zéolithe Ω de composition molaire 0,90 $Na_2O$ – 0,10 $TMA_2O$–$Al_2O_3$ – 7,6 $SiO_2$ sont calcinés à 500°C pendant deux heures sous un mélange d'azote et d'oxygène. Les débits sont de 65 l·$h^{-1}$ pour l'azote et 20 l·$h^{-1}$ pour l'oxygène. Après ce traitement les cations TMA sont éliminés.

La zéolithe est ensuite échangée trois fois dans 600 $cm^3$ d'une solution de $NH_4NO_3$ 5N à 100°C pendant 3 heures. Le solide obtenu, référencé OM13 a un spectre de diffraction X de la zéolithe Ω et possède les caractéristiques physico-chimiques suivantes:

| $\frac{SiO_2}{Al_2O_3}$ | % Na pds | Diffraction X | | | Adsorption |
|---|---|---|---|---|---|
| | | Cristallinité % | Paramètres a (nm) | c | Azote % pds |
| 7,6 | 0,04 | 100 % | 1,818 | 0,761 | 12 |

Contrairement aux solides désaluminés décrits dans les exemples 1 à 5, OM13 ne possède pas de microporosité secondaire et est détruit par une calcination sous air sec à 950°C.

EXEMPLE 8. Préparation des catalyseurs A, B, C, D.

Les zéolithes Ω OM8 de l'exemple 2, OM12 de l'exemple 4 et OM13 de l'exemple 7 sont utilisées pour préparer des catalyseurs référencés respectivement A, B, C.

La composition pondérale des catalyseurs A, B, C est la suivante:
16% zéolithe Oméga
3% oxyde de nickel NiO
14% oxyde de molybdène $MoO_3$
4% oxyde de phosphore $P_2O_5$
63% alumine $Al_2O_3$.

L'alumine est une pseudo-boehmite obtenue par hydrolyse d'un alcoolate d'aluminium; le gel est ensuite peptisé par ajout d'acide nitrique, puis malaxé. On ajoute ensuite la zéolithe Oméga et après malaxage, la pâte est forcée au travers d'une filière de diamètre 1,4 nm, puis séchée sous flux d'air à 120°C, puis calcinée à 550°C pendant 1 heure.

Le support ainsi obtenu est imprégné après refroidissement par la technique de l'imprégnation à sec dans un drageoir rotatif. La solution d'imprégnation est constituée de nitrate de nickel, de paramolybdate d'ammonium et d'acide phosphorique. Les extrudés imprégnés sont ensuite séchés, puis calcinés sous air à 500°C pendant deux heures.

EXEMPLE 9

Les catalyseurs A, B, C dont les préparations sont décrites dans l'exemple précédent sont utilisés pour réaliser des tests d'hydrocraquage.

Le catalyseur est chargé dans l'unité de test à raison de 60 ml, puis présulfuré par passage d'une charge constituée de 98% poids de n-hexane et de 2% poids de diméthyldésulfure, à une température de 320°C et une pression d'hydrogène de 60 bars.

La charge à traiter possède les caractéristiques suivantes:
Point 10%: 382°C
Point 50%: 429°C
Point 90%: 475°C
Densité $d_4^{20}$: 0,856
N (ppm): 630
% S: 2,07.

Après la présulfuration, la pression est portée à 120 bars, la charge est admise sur le catalyseur à une vitesse volumique horaire de 1 litre de charge par litre de catalyseur et par heure, le débit d'hydrogène étant de 1000 litres d'hydrogène gazeux par litre de charge liquide.

Les catalyseurs sont portés progressivement à la température de 370°C.

Les performances sont définies selon deux critères: conversion et sélectivité. La conversion est définie comme étant la fraction de la recette de point d'ébullition inférieur à 380°C. La sélectivité est définie comme étant la fraction de la recette de points d'ébullition compris entre 150°C et 380°C, ramenée à la conversion.

Les résultats, après une stabilisation de 100 heures, sont les suivants:

| Catalyseur | Rapport molaire $SiO_2/Al_2O_3$ de la zéolithe Oméga | Conversion | Sélectivité |
|---|---|---|---|
| A | 25 | 82 | 63 |
| B | 150 | 43 | 80 |
| C | 7,6 | 70 | 52 |

Le catalyseur A contenant une zéolithe Oméga de rapport molaire 25 est d'une part plus actif, d'autre part plus sélectif que le catalyseur C contenant une zéolithe Oméga non désaluminée de rapport 7,6. Le catalyseur B est relativement peu actif ce qui est dû à une désalumination très poussée de la zéolithe le constituant, cependant cette faible activité est compensée par une forte sélectivité.

**Revendications**

1. Catalyseur renfermant en poids au moins:
(a) environ 50 à 95% d'une matrice amorphe.
(b) 3 à 50% environ d'une zéolithe de structure oméga (ou mazzite) désaluminée caractérisée par:
– un rapport molaire global $SiO_2/Al_2O_3$ supérieur ou égal à 10,
– une teneur en sodium inférieure à 0,5% en poids, déterminée sur la zéolithe calcinée à 1100°C,

– des paramètres $\vec{a}$ et $\vec{c}$ de la maille élémentaire respectivement inférieurs à 1,814 nm et à 0,759 nm,

– une capacité d'adsorption d'azote mesurée à 77 K sous une pression partielle P/Po = 0,19, supérieure à 5% en poids, et

– une répartition poreuse comprenant entre 0,2 et 50% du volume poreux contenu dans des pores de rayon situés entre 1,5 et 14 nm, le reste du volume poreux étant contenu essentiellement dans des pores de rayon inférieur à 1 nm et,

(c) au moins un métal ou un composé de métal choisi dans le groupe constitué par les métaux nobles ou non nobles du groupe VIII de la classification périodique des éléments.

2. Catalyseur selon la revendication 1 dans lequel la zéolithe est caractérisée par:

– un rapport molaire global $SiO_2/Al_2O_3$ supérieur à 15,

– des paramètres cristallins $\vec{a}$ et $\vec{c}$ compris respectivement entre 1,813 et 1,794 nm et entre 0,795 et 0,749 nm,

– une capacité d'absorption d'azote mesurée à 77 K pour une pression partielle P/Po = 0,19 supérieure à 11% en poids,

– une répartition poreuse comprenant de 1 à 50% du volume poreux contenu dans des pores de rayons situés entre 2 et 8 nm, le reste du volume poreux étant contenu dans des pores de rayons inférieurs à 1 nm.

3. Catalyseur selon l'une des revendications 1 à 2 dans lequel la matrice est choisie dans le groupe constitué par au moins l'alumine, la silice, la silice-alumine, l'alumine-oxyde de bore, la magnésie, la silice-magnésie, la zircone, l'oxyde de titane et l'argile et dans lequel la concentration en un métal ou métaux nobles du groupe VIII, exprimée en poids de ce ou ces métaux, est comprise entre 0,03 et 3%, la concentration en métal ou métaux, non nobles du groupe VIII, exprimée en poids de ce ou ces métaux, étant comprise entre 0,05 et 10%.

4. Catalyseur selon la revendication 3 renfermant en outre au moins un composé d'au moins un métal du groupe VI.

5. Utilisation du catalyseur selon l'une des revendications 1 à 4 dans les réactions d'hydrocarbures.

**Patentansprüche**

1. Katalysator enthaltend in Gewichtsteilen zumindest:

(a) etwa 50 bis 95% einer amorphen Matrix,

(b) 3 bis etwa 50% eines Zeolithes der Omega-Struktur (oder Mazzit), der an Aluminium abgereichert ist, gekennzeichnet durch

– ein molares Gesamtverhältnis $SiO_2/Al_2O_3$ über oder gleich 10,

– einen Natriumgehalt unterhalb 0,5 Gew.-%, bestimmt an dem bei 1100°C calcinierten Zeolith,

– Parameter $\vec{a}$ und $\vec{c}$ der Elementarzelle von jeweils unterhalb 1,814 nm und 0,759 nm,

– eine Adsorptionskapazität für Stickstoff, gemessen bei 77 K unter einem Partialdruck P/Po = 0,19, von über 5 Gew.-%, und

– eine Porenverteilung, die 0,2 bis 50 Vol.-% der Poren in den Poren des Bereichs zwischen 1,5 und 14 nm und den Rest des Porenvolumnes im wesentlichen in den Poren des Bereiches unterhalb 1 nm aufweist und,

(c) zumindest ein Metall oder eine Verbindung eines Metalls aus der Gruppe, welche durch die Edelmetalle oder Nichtedelmetalle der Gruppe VIII des periodischen Systems der Elemente bestimmt ist.

2. Katalysator nach Anspruch 1, wobei der Zeolith gekennzeichnet ist durch:

– ein molares Gesamtverhältnis $SiO_2/Al_2O_3$ über 15,

– Kristallparameter $\vec{a}$ und $\vec{c}$, die jeweils zwischen 1,813 und 1,794 nm und zwischen 0,759 und 0,749 nm liegen,

– eine Absorptionskapazität für Stickstoff, gemessen bei 77 K für einen Partialdruck P/Po = 0,19 von über 11 Gew.-%.

– eine Porenverteilung, die 1 bis 50 Vol.-% der Poren in den Poren des Bereiches zwischen 2 und 8 nm und den Rest des Porenvolumens in den Poren des Bereichs unterhalb 1 nm aufweist.

3. Katalysator nach Anspruch 1 oder 2, dadurch gekennzeichent, daß die Matrix aus der Gruppe gewählt ist, die aus zumindest Aluminiumoxid, Siliciumoxid, Siliciumdioxid-Aluminiumoxid, Aluminiumoxid-Boroxid, Magnesiumoxid, Siliciumoxid-Magnesiumoxid, Zirconoxid, Titanoxid und Ton gewählt ist und worin die Konzentration an Metall oder Edelmetallen der Gruppe VIII, ausgedrückt in Gewichtseinheiten dieses Metalls oder der Metalle zwischen 0,03 und 3% liegt und die Konzentration an Nichtedelmetall oder -metallen der Gruppe VIII, ausgedrückt in Gewichtseinheiten dieses Metalls oder dieser Metalle zwischen 0,05 und 10% liegt.

4. Katalysator nach Anspruch 3, enthaltend außerdem zumindest eine Verbindung oder zumindest ein Metall der Gruppe VI.

5. Hydrocracking Verfahren in Anwesenheit von Katalysatoren nach Ansprüchen 1–4.

## Claims

1. Catalyst containing by weight at least:
a) about 50 to 95 of an amorphous matrix,
b) about 3 to 50% of a dealuminated zeolite of omega (or mazzite) structure characterized by:
- a total $SiO_2/Al_2O_3$ molar ration of at least 10,
- a sodium content lower than 0.5% by weight, determined on the zeolite roasted at 1100°C,
- $\vec{a}$ and $\vec{c}$ parameters of elementary mesh respectively lower than 1.814 nm then 0.759 nm,
- a nitrogen adsorption capacity at 77 K, under a partial pressure P/Po = 0.19, higher than 5% by weight and
- a pore distribution comprising from 0.2 to 50% of the pore volume contained in pores of radii ranging from 1.5 to 14 nm, the remaining pore volume being essentially contained in pores of a radius lower than 1 nm and
c) at least one metal or compound of metal selected from the group consisting of the noble or non noble metals of group VIII of the periodic classification of elements.

2. Catalyst according to claim 1 wherein the zeolite is characterized by:
- a total $SiO_2/Al_2O_3$ molar ration higher than 15,
- $\vec{a}$ and $\vec{c}$ crystalline parameters respectively ranging from 1.813 to 1.794 nm and from 0.759 to 0.749 nm,
- a nitrogen adsorption capacity at 77 K, for a partial pressure P/Po = 0.19, higher than 11% by weight,
- a pore distribution comprising 1 to 50% of the pore volume contained in pores of radii ranging from 2 to 8 nm, the ramining pore volume being contained in pores of radii lower than 1 nm.

3. Catalyst according to one of claim 1 or 2, wherein the matrix is selscted from the group consisting of at least alumina, silica, silica-alumina, alumina-boron oxide, magnesia, silica-magnesia, zirconia, titanium oxide and clay, and wherein the concentration of noble metal from group VIII, expressed by weight of this or theses metals, ranging from 0.03 to 3%, the concentration of non noble metal or non noble metals from group VIII, expressed by weight of this or these metals, ranging from 0.05 to 10%.

4. Catalyst according to claim 3 furthermore containing at least one coumpound of a metal from group VI.

5. The use of the catalyst according to one of claims 1 to 4 in hydrocarbons hydrocracking reactions.